# EUROPEAN PATENT APPLICATION

(11) **EP 2 829 176 A2**
(43) Date of publication of application: **28.01.2015**
(21) Application number: 14176915.8
(22) Date of filing: 05.01.2006
(51) Int. Cl.: A01M 7/00

(54) **A method and a system for regulation of pressure**

(30) Priority: 07.01.2005 DK 200500039
(62) Divisional of application: 06700180.0
(71) Applicant: HARDI INTERNATIONAL A/S, 2630 Taastrup (DK)
(72) Inventor: Sørensen, Bent Ulsted, 2630 Taastrup (DK); Biehe, M Snorre Krogh, 4000 Roskilde (DK)
(74) Representative: Zacco Denmark A/S

(57) **Abstract**

A mobile spraying plant (1) for spraying crops, comprising a tank (10), at least one nozzle (60) in fluid communication (70) with said tank (10), a controllable regulating valve (30) for regulating a flow of liquid between the tank (10) and said nozzle(s) (60), an electronic control unit (101) configured for controlling the degree of opening of said regulating valve (30) and comprising a calculation unit and a storage/register, and a flow meter (40) for determining the flow of liquid between the tank and said nozzle(s) (60) and configured for communicating with said electronic control unit (101), which spraying plant (1) also comprises a pressure transducer (200) configured for measuring the pressure on the nozzles (60) when the throughput is outside the area of functioning of the flow meter; which pressure transducer (200) is in communication with said electronic control unit (101); and said electronic control unit (101) being configured for calculating a flow based on data (202) from said pressure transducer (200).

## Description

The invention relates to a mobile spraying plant for spraying crops, said spraying plant comprising a tank, at least one nozzle in fluid communication with said tank, a controllable regulating valve for regulating a flow of liquid between the tank and the nozzles, an electronic control unit configured for controlling the degree of opening of the regulating valve and comprising a calculator unit and a storage/register, and a flow meter for determining the flow of liquid between the tank and the nozzles and configured for communicating with said electronic control unit. The invention also relates to a method of regulating the throughput of a spraying liquid from a tank to at least one nozzle in a mobile spraying plant, said spraying plant also comprising a controllable regulating valve for regulating a flow of liquid between the tank and the nozzles, an electronic control unit configured for controlling the degree of opening of the regulating valve, comprising a calculator unit and a storage/register, a flow meter for determining the current flow of liquid between the tank and the nozzles, configured for communicating with said electronic control unit, which method comprises regulation of the degree of opening of the regulating valve based on a desired throughput, information on the speed of the spraying plant, and information on the current throughput at least when the spraying plant moves at a predominantly even speed.

In connection with the spraying of fields with spraying agents, eg fertilizers, herbicides or pesticides, a spraying plant is usually employed that consists of a tank for storing the spraying agent in liquid state, a pump in fluid communication with the tank, and a number of nozzles in fluid communication with said pump. Usually spraying plants are incorporated in a mobile unit, eg a tractor or a trailer for a tractor. The nozzles are arranged on a boom transversally to the direction of movement of the mobile unit, thereby enabling a large area to be covered when the mobile unit moves across a field.

In case of a given constant liquid throughput through the nozzles a specific amount of liquid per areal unit will be distributed for a given speed at which the mobile unit moves across the field. However, it is not possible to accomplish a constant even speed when a vehicle moves across an uneven field. Additionally changes in speed occur in particular when turning in the turn space and changes in course occur, eg due to irregular field shape, etc. In those cases a constant flow through the nozzles will lead to overdosing in an area of a field where the speed is reduced. This represents a waste which entails financial as well as environmental consequences and which is highly undesirable. Correspondingly, in areas where the speed is too high compared to the sprayed amount, the amount of spraying agent distributed per areal unit will be insufficient for obtaining the intended effect, which influences the growth conditions of the crop. Therefore it is desirable to be able to control the spraying process.

For that reason, today's mobile spraying units are often equipped with a regulating valve inserted between the pump and the nozzles for regulating the liquid throughput to the nozzles. Typically the regulating valve is controlled by an electronic control unit in the form of a processor based on information on the speed of the mobile unit (and hence that of the spraying plant) relative to the field and on the throughput of liquid through the system. Thereby it is possible to regulate the throughput to the nozzles. The throughput is measured by a flow meter which is typically arranged in the direction of flow of the liquid spraying agent between the regulating valve and the nozzles.

When crops in a field are sprayed a number of situations arise, eg in connection with turns where it is necessary to lower the speed of the vehicle considerably or to stop altogether. Then it is necessary to stop the spraying, ie the liquid throughput to the nozzles ceases. In those cases, when there is no flow through the system and accordingly no signal from the flow meter, the flow meter shuts down. When there is no throughput there is thus no reference for the control of the regulating valve. Therefore, upon resumed spraying e.g. following turning, it will be long, typically within a range of 10-20 seconds, before the regulation functions optimally again. Depending on the acceleration, it corresponds to the vehicle carrying the spraying plant having travelled 10-20 further ahead before the spraying process - and hence the dosing of the spraying agent - is yet again correct.

Today comprehensive requirements to accuracy are made in connection with the dosage of nutrients, herbicides and pesticides in connection with the spraying of fields. This is due to both aggravated regulatory requirements and the desire to optimise the spraying process financially. It is therefore very desirable to be able to control the spraying process very accurately. By the technique described above, it is to a certain degree possible to control the spraying process. However, as mentioned, there are a number of situations in which this goal is not achieved with a desired degree of precision. Moreover, operating systems of the kind mentioned above generally operate with a certain delay, and therefore a very high degree of precision in the control process cannot be obtained. In order to compensate for this, the prior art spraying plants presuppose use of sophisticated and very quick, complex and expensive control valves and accurate and expensive flow meters.

It is therefore an object of the invention to provide a spraying plant for spraying of crops that solves the problems associated with the prior art spraying plants. It is a further object to provide a spraying plant by which the spraying process can be controlled very quickly and very accurately, and wherein simple and inexpensive components for measurement and control can be used.

It is moreover an object of the invention to provide a method of regulating the throughput of a spraying liquid in a spraying plant for spraying of crops, by which the spraying process can be controlled very quickly and very accurately and wherein it is also possible to use simple and inexpensive components for measurement and control.

It is moreover an object of the invention to accomplish an alternative spraying plant and a method of regulating the throughput to the nozzles in the spraying plant.

The object of the invention is accomplished by means of a mobile spraying plant for spraying of crops. The plant comprises a tank, at least one nozzle in fluid communication with said tank, a controllable regulating valve for regulating a liquid flow through between the tank and the nozzles, an electronic control unit configured for controlling the degree of opening of the regulating valve and comprising a calculator unit and a storage/register, and a flow meter for determining the flow of liquid between the tank and the nozzles configured for communicating with said electronic control unit, said spraying plant also comprising a device for registering the degree of opening of the regulating valve, said device being in communication with said electronic control unit, and said electronic control unit being configured for registering, storing and processing data concerning degree of opening of the regulating valve.

The object is also accomplished by a method of regulating the throughput of a spraying liquid from a tank to at least one nozzle in a mobile spraying plant, said spraying plant also comprising a controllable regulating valve for regulating a flow of liquid between the tank and the nozzles, an electronic control unit configured for controlling the degree of opening of the regulating valve which comprises a calculator unit and a storage/register, a flow meter for determining the current liquid flow between the tank and the nozzles and configured for communicating with said electronic control unit, and a device for registering the degree of opening of the regulating valve configured for communicating with the electronic control unit, said method comprising regulation of the degree of opening of the regulating valve based on a desired throughput, information on the speed of the spraying plant, and information on the current throughput at least when the spraying plant moves at a predominantly even speed, and wherein the method also comprises continuous registration of the degree of opening of the regulating valve and the speed of the spraying plant in time intervals when the current throughput is within the first interval around the desired throughput; calculation of a correlation between the speed of the spraying plant and the degree of opening of the regulating valve based on said registration; and wherein the degree of opening of the regulating valve is corrected in case of changes in speed on the basis of said stored correlation between the speed of the spraying plant and the degree of opening of the regulating valve.

The regulation of the flow obtained by the spraying plant and the method can be designated adaptive regulation.

By the spraying plant and the method according to the invention it is accomplished that the spraying process can quickly be caused to assume the desired level with regard to amount per areal unit in those contexts where the spraying process is resumed following operational shutdowns of the spraying plant and sudden changes in speed. This may be the case eg when turns in the turning space are concerned, when a field is entered for the first time, or start following charging with spraying liquid.

It is also accomplished that, in situations where the speed of the mobile spraying plant is changed, and, based on information on flow and speed, the conventional steering only slowly corrects the sprayed amount, it will be possible to control the spraying process based on a stored correlation between the degree of opening/position of the regulating valve and the speed of the spraying plant. Thereby a throughput through the spraying plant to the nozzles - and hence a sprayed amount per areal unit - is quickly reached which is very close to the desired throughput. That is a very accurate control of the spraying process is quickly obtained which safeguards against excessive or insufficient dosage of the spraying liquid, in particular when specific areas of a field are concerned, eg in the turning space and in case of low areas in the terrain. In situations where the spraying plant operates at an essentially even speed relative to the field, the conventional steering based on flow and speed will take over.

The invention also relates to the use of the spraying plant as disclosed for exercising the method as shown.

In the following the invention will be described in further detail with reference to the drawing, wherein:
- Figure 1 is a diagrammatical view of the principle of a spraying plant and a system for controlling the spraying process in accordance with the prior art;
- Figure 2 is a corresponding diagrammatical view showing the principle of a spraying plant and a system of controlling the spraying process in accordance with the invention;
- Figure 3 is a diagrammatical view of the correlation between the throughput of spraying agent relative to a selected fixed point and the power supplied to a motor in the regulating valve;
- Figure 4 shows a spraying plant as shown in Figure 2, whereto a pressure transducer is also coupled; and
- Figure 5 shows a spraying plant as shown in Figure 1, whereto a
   pressure transducer is also coupled.

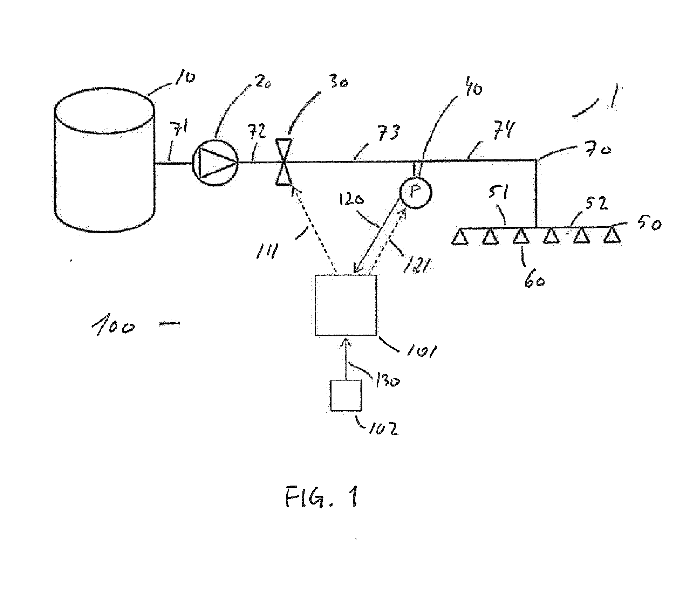

Figure 1 is a diagrammatical view which outlines the principle of a known mobile spraying plant 1. The spraying plant 1 comprises a tank 10, a pump 20, a controllable regulating valve 30, a flow meter 40 and a boom 50. On the boom 50 one or more outlet nozzles 60 are arranged. Through a tubular connection 70 the nozzles 60 are in fluid communication with the tank 10, whereby the tank 10 is in fluid communication 71 with the pump 20; the pump 20 is in fluid communication 72 with the regulating valve 30; the regulating valve is in fluid communication 73 with the flow meter 40; and the flow meter 40 is in fluid communication 74 with the boom 50 and hence the nozzles 60. In addition to the controllable regulating valve 30, the spraying plant 1 also comprises a main valve (not shown). The main valve is typically arranged in connection with the boom, eg on the tubular section 74 or near the tank 10. The main valve is used to shut off the spraying plant when it is not in use and eg when the tank is to be (re)charged or in case of turns in the turning space.

The mobile spraying plant 1 is mounted on a vehicle (not shown) eg a tractor and the like which is suitable for driving in a field. Alternatively the spraying plant 1 can be mounted on a trailer (not shown) for a vehicle. The spraying plant 1 is thus a mobile unit.

The tank 10 is intended for containing a spraying agent in liquid state, eg a nutrient (fertilizer), a herbicide, a pesticide, or the like intended for spraying of a crop on a field.

The regulating valve 30 is of a type equipped with an actuator/motor (not shown), by which it is possible to control the regulating valve electronically.

During use, spraying agent is pumped by means of the pump 20 from the tank 10 to the nozzles 60 when the main valve (not shown) is open. The throughput is regulated by the regulating valve 30 and is measured continuously by the flow meter 40.

In the figure the boom 50 is arranged transversally of the vehicle and the direction of movement of the mobile spraying plant 1 and is arranged such as to protrude a distance from the sides of the vehicle, thereby enabling the spraying plant to cover a large area (a path), when the spraying plant 1 moves across the field. A number of nozzles 60 are arranged on the boom 50. Alternatively other kinds of boom/nozzle arrangements may be concerned, eg mist sprayers.

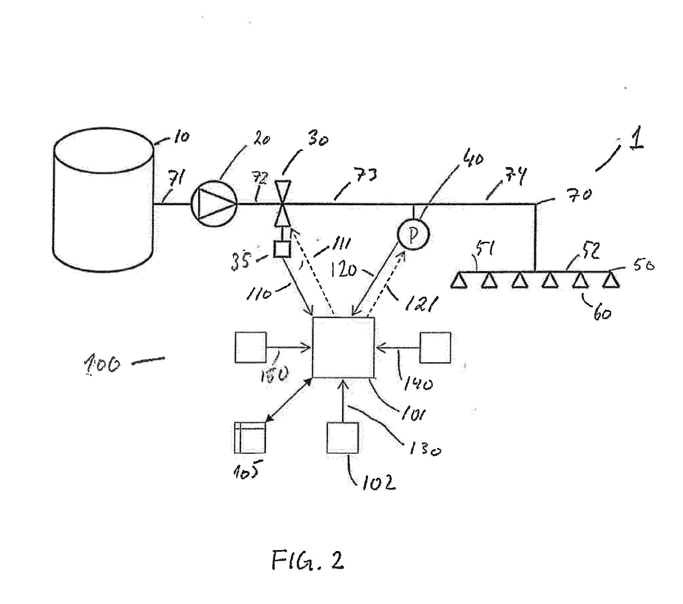

Typically the boom 50 is divided into two or more sections, whereby the boom 50 can be folded when the spraying plant is not in use, but also such that the nozzles 60 arranged on a section of the boom 50 can be coupled in or out if necessary. In Figures 1 and 2, the boom 50 is shown eg with two sections 51 and 52, but typically a boom 50 will be divided into a larger number of sections, each with one or more nozzles 60.

To control the spraying process a control system 100 is used comprising an electronic control unit 101. The control unit 101 is coupled to and configured to control the regulating valve 30 in that a control signal 111 can be transferred to the controllable valve 30. Also the flow meter 40 is connected to the control unit 101 to the effect that a signal 120 from the flow meter 40 can transmit a measurement result for the liquid throughput to the control unit 101. Additionally the control unit 101 is configured for emitting a control signal 121 to the flow meter. This control signal 121 is intended for turning the flow meter 40 on and off when there is no throughput, ie when the plant is not active and the main valve is closed.

Moreover the control system is coupled to a source 102 for information on the speed of the vehicle/the spraying plant which transmits a signal 130 regarding this to the control unit 101. Based on information 130, 120 regarding the speed of the vehicle and the throughput through the flow meter 40, a guide signal 11 to the regulating valve 30 is calculated, whose position is regulated relative to a desired throughput, which is stored eg in the control system, the degree of opening of the regulating valve 30 being increased or reduced to allow increased or reduced inflow, respectively, to the nozzles 60. Of course, the desired throughput is based on the amount of spraying agent per areal unit which is optimal for the given crop at the given time of the season when spraying is to be performed. The amount which, of course, also depends on the concentration of the spraying agent, is a value that can be coded into the control unit 101. This means that the desired flow throughput depends at least on this value and on the factors speed and liquid throughput. In turn, the highest possible liquid throughput depends on the capacity of the pump 20, the fluid connection 70 and the width of the boom 50, ie how many nozzles 60 are arranged on the boom 50, and on the type of nozzles 60. Different types of nozzles 60 have different capacities.

Figure 2 is a diagrammatical view of an explanatory sketch of a mobile spraying plant 1 according to the invention. In general, the mobile spraying plant 1 is configured as taught above. Correspondingly the spraying plant 1 is equipped with a control system 100 comprising a control unit 101 for controlling the position of the regulating valve 30 by means of a control signal 111 calculated on the basis of a signal 130 containing information on the speed of the vehicle and information on desired flow throughput and capacity of the spraying plant determined eg by the width of the boom (number of sections) and number and type of nozzles on each section, ie the capacity of the nozzles coupled there to.

The mobile spraying plant according to the invention also comprises a control device 35 coupled to the controllable regulating valve 30, said control device 35 being configured for registering the position of the valve, ie for determining the degree of opening of the regulating valve, and transmitting a signal 110 with information about the current position of the valve to the control unit 101. The control unit 35 is preferably an electronic sensor, and the signal 110 is preferably transferred electronically.

Examples of an expression of the position or degree of opening of the regulating valve include the power, PWM, which is to be supplied to the control motor 30 of the regulating valve in order to open or shut the regulating valve. Such signal 110 is emitted continuously or at even intervals in particular conditions that are subject to further discussion below.

As described above, the throughput to the nozzles 60 is controlled by the regulating valve 30 being influenced on the basis of information on the speed 130 of the vehicle, the current throughput 120 as measured by the flow meter 40, and the desired throughput. If the throughput is too low compared to the desired amount at the given speed, a control signal 111 is transmitted to the regulating valve 30 which brings about a further opening of the regulating valve 30, and if the throughput is too high, a control signal 111 is emitted which brings about a further closing of the regulating valve 30.

The control device 35 is associated with the regulating valve 30 and measures and transmits information 110 on the position of the regulating valve to the control unit 101. Based on this information an improved, faster control system 100 for the spraying plant 1 is accomplished. The control device 35 is preferably an electronic sensor connected to the regulating valve 30 and electronically connected to the control unit 101.

When the vehicle performs a relatively even movement at approximately constant speed across a given stretch/distance, eg on long, even stretches of the field, periods/time intervals will occur, where it is not necessary to regulate the throughput, ie periods when the current throughput is approximately identical with the desired throughput selected for a specific set point, A.

It is noted that the desired throughput is a function of the speed of the mobile spraying plant.

A so-called non-regulating interval, B, is selected for the currently measured flow 120 relative to the set point A, within which it is not necessary to regulate the position of the regulating valve 30 and hence the liquid throughput.

The non-regulating interval, B, is thus characterised in that, when the measured throughput is comprised within this interval, B, the deviation from the desired throughput is so adequately small that it is not necessary to regulate the position of the valve 30.

It has been found that it is desirable that such non-regulating interval B is comprised within +/- 1 %, preferably +/- 0.5% deviation between the set point A and the currently measured throughput.

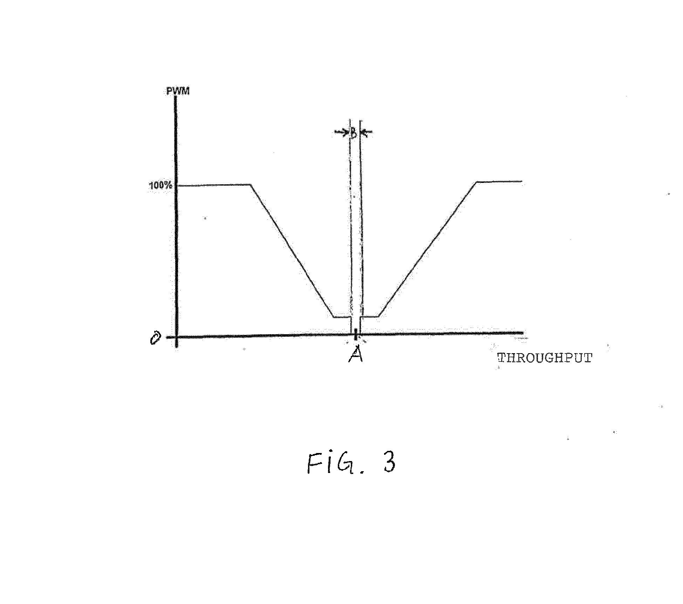

Figure 3 diagrammatically shows the correlation between the throughput of liquid to nozzles 60 and the position of the regulating valve 30, represented by the power, PWM, necessarily supplied to the motor of the regulating valve 30 to change the throughput. From the figure it will appear that the remoter the measured throughput is from the desired throughput (for the given speed and other system conditions) at the set point, A, the more power it is necessary to supply to the motor of the control valve to increase or reduce the throughput. Likewise, the non-regulating interval B around the desired throughput A is illustrated, within which it is inexpedient to regulate the throughput through the opening of the regulating valve 30.

Besides, it should be noted that the desired throughput represented by the set point A depends on the speed and on the concrete number of nozzles 60 on the boom 50, the capacity of the nozzles, but also on which type of spraying agent is concerned, and optionally on field-specific data. Such field-specific data may take into account particular soil conditions on the concrete location as well as landscape contours or the like which may influence how large an amount of the relevant spraying liquid is desirable. These data concerning nozzles and field characteristics may be coded into the storage unit 105 of the control system.

According to the invention, the position, ie the degree of opening, of the regulating valve 30 and the measured corresponding speed of the vehicle are registered/logged as data pairs in the storage unit 105 of the control system when the currently measured throughput is comprised within the non-regulating interval, ie when the vehicle moves at an approximately even speed as described above. This data pair can be viewed as a coordinate in a system of coordinates with the position of the regulating valve along the axis of abscissa and the speed of the vehicle along the axis of ordinates. By continuously logging such coordinates while the position of the valve is comprised within the accepted tolerance (the non-regulating interval, B) a functional correlation between the position 110 of the regulating valve and the speed of the vehicle 130 is calculated/extrapolated in the control unit 101. The correlation is approximated by a power function or it may alternatively be calculated as a linear correlation between the registered coordinates, eg as a BSL (Best Straight Line) approximation. Use of other current approximation methods is also an option.

This correlation between the position of the regulating valve and the speed of the vehicle is saved in a memory 105 associated with the control unit 101 and is continuously updated. Hereby continuously improved information on the correlation between the position of the valve and the speed of the vehicle is obtained.

In situations when it is necessary to reduce the speed considerably, eg in connection with turns in the turn space or operation halts, eg when the tank 10 is filled, it is necessary to interrupt the throughput of spraying agent by closing off the main valve. Thereby no signal 120 is emitted by the flow meter 40.

In connection with the prior art technique described above, where the regulation of the throughput is based exclusively on measurements of the speed of the vehicle and the liquid throughput at the flow meter 40, it will take inexpediently much time, following restart after the turn, until the liquid throughput is again regulated to the desired level (set point A). This is due to the fact that, when the throughput is discontinued on the main valve when the turn starts, the position of the regulating valve 30 may be far from the position which yields the desired liquid throughput at the speed at which the spraying is resumed following the turn. If, for instance, the regulating valve was in a position to allow maximal throughput (occurs eg when a residue of spraying agent in the tank is to be discharged before refilling) when the main valve turned off the throughput, the regulating valve 30 will start in this position when, following the turn, the spraying is resumed, whereby an overdosing of several hundred percent will be likely to occur across a distance of 10-20 meters before the position of the regulating valve 30 will again allow only the desired throughput.

According to the invention the calculated correlation between the position of the regulating valve 30 and the speed for continuously calculating the desired position of the regulating valve 30 during the turning and a signal 11 for controlling the valve based thereon can be transmitted from the control unit 101 to the motor of the control motor 30.

This means that, once the turn is completed and the main valve (not shown) is opened to allow activation of the nozzles to resume the spraying procedure, the regulating valve 30 is regulated to a position which is adapted to the speed at which the vehicle moves at the given point in time: Thus a near correct throughput is available when the spraying procedure is resumed, which is to be understood such that the concrete throughput is largely identical with the desired throughput.

When, following stop, the throughput is resumed the flow meter will again transmit signals 120 concerning the magnitude of the throughput, and the usual regulating mechanism, as described above, is activated again. This means that an accurate regulation can be obtained in merely 2-10 seconds, and that the difference between the desired throughput and the actual throughput will typically be much smaller during this period than was the case with the technique taught by the prior art. This means that the stored information is used to perform a calculation or a prediction of the most likely position of the regulating valve 30 to yield the desired throughput at the given speed.

When, for instance, the mobile spraying plant 1 reaches the end of a field, the main valve is disconnected when the speed is reduced to eg 7 km/t. This means that there are no inputs from the flow meter 40. Instead the control unit 101 regulates the position of the regulating valve 30 with starting point in the logged data for the position of the regulating valve 30 with speed as reference. Following the turn, the spraying is resumed when the vehicle leaves the turn space, eg when the speed reaches 4 km/t. Now, as a consequence of the additional control, the regulating valve 30 has a position very close to the set point A, ie close to the desired throughput; it follows that only a small correction of the valve position is necessary when the usual control of the regulating valve 30 is again implemented based on information from the flow meter.

Moreover, the control system may be configured for receiving and processing a signal (not shown) with information whether the boom is ready to spray, unfolded or folded. Thereby it is obtained that the regulating valve and the main valve can be opened only when the boom is in its ready-to-spray state. By storing information about the relation between the position of the regulating valve 30 and the speed for a given crop, in a given field and for a given spraying agent, such information can also be used to predict the position of the regulating valve when the field is entered for the first time in a new spraying session.

It happens that the tank 10 with spraying agent is depleted during spraying of a field. In that case the contents of air in the spraying agent will be very high immediately before the tank 10 runs completely empty. To compensate for this, the system will increase the throughput through the regulating valve 30. Without calculation of the position/degree of opening of the regulating valve 30 based on the logging of position/speed described above, the spraying will, following refilling of the tank, start again with an entirely open regulating valve 30, which involves heavy overdosing until the throughput has been regulated. However, by using a control signal 111 calculated as described above, the throughput can be restarted at a level near the set point A.

According to a further embodiment of the invention, the control unit 101 is also configured to also receive signals 140 from sensors configured for registering the number of nozzles or sections that are active during a spraying session. In some cases it may be necessary to deactivate a few nozzles 60 or sections on the boom to discontinue the flow through those nozzles/sections. This may be the case eg when wedge-shaped sections of a field are to be sprayed, or when one or more nozzles or sections extend beyond the boundary of the field. When a section is disconnected or connected the throughput will change very rapidly. Based on the signal 140 the range covered by the boom is calculated and as a consequence of this which area will be covered by the spraying when the spraying plant 1 moves. By taking this into account in the calculation of a control signal 111 based on the logged correlations between speed/position, a new position for the regulating valve 30 corresponding to the desired throughput can be calculated almost instantaneously.

If a section of the boom is deactivated during the spraying, the regulating valve 30 will thus move accordingly based on the logged data and the width of the sections. As a consequence the throughput is adjusted/regulated more rapidly to compensate for the shut-down sections compared to a scenario in which the control signal 111 was calculated solely on the basis of speed 130 and throughput 120.

According to an alternative embodiment the control system 100 can be configured such as to enable regulation of the throughput as outlined above based on a selection of individual nozzles arranged on the boom 50. Thereby it becomes possible to have several different types of nozzles for different purposes on the boom. Each type of nozzles has an associated set of data describing the properties of the nozzle type relative to the spraying process, ie at least their capacity, which data are saved in the storage unit 105 of the control system.

According to a further embodiment the improved control system 100 is also configured for changing the calculation method for the control signal 111 from the method which is based exclusively on flow measurement to the method based on the logging of the speed and the of position of the regulating valve when the spraying plant suddenly changes speed, eg in connection with gear changing or due to changes in the quality of the terrain driven in (eg loose or wet soil or bumps and holes). As a consequence of this the throughput can be adapted more quickly to the desired throughput A in connection with changes in speed, while the mobile spraying plant moves in the field.

According to a further embodiment of the invention, the control system 100 is further configured for changing the calculation method for the control signal 111 from the method based on flow measurement to the method based on logging of the speed and of the position of the regulating valve when another dosage is desired, ie when it is desired to change the set point A. Such situations occur eg in connection with low points in the terrain where the crop will often grow more densely. Therefore there is a need in such areas of the field to be able to quickly increase the amount of spraying agent per areal unit. A signal 150 is transmitted to the control unit 101, and a control signal 111 is calculated for the regulating valve 30 which compensates for the increased/decreased desired throughput, eg by the driver entering a new, desired dosage based on the knowledge obtained visually by the driver about the position of the vehicle. Alternatively, the steering signal 111 can be calculated in that the signal 150 contains information on the position of the vehicle collected automatically, which information is compared to data stored in the storage unit 105 of the control system on the contour of the field and the desired dosage for each position in the field. For instance based on information regarding the location of the vehicle in the field achieved by means of a GPS system.

Moreover the control system 100 can be configured to be able to communicate with a display in the driver's cab and thus be able to show eg information on the position of the regulating valve 30.

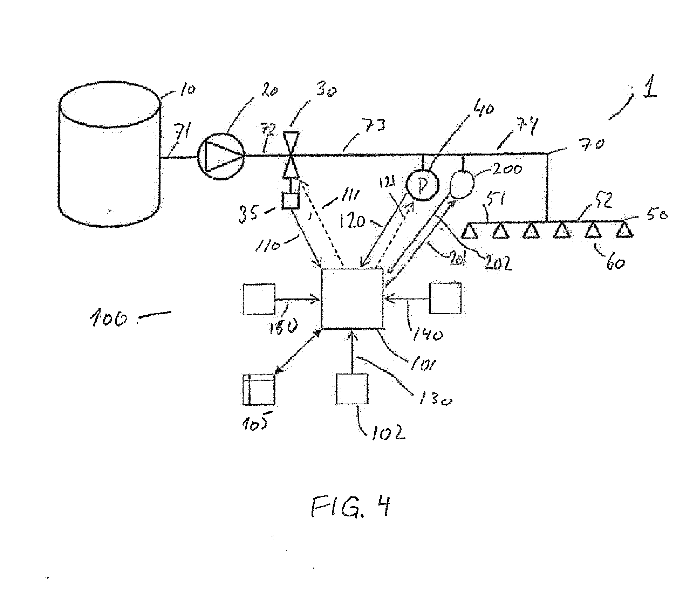

Moreover the mobile spraying plant 1 can be provided with a pressure transducer 200 (see Figure 4) arranged on the tubular connection 70 between the tank 10 and the nozzles 60, preferably in a position in immediate vicinity of the flow meter 40.

The pressure transducer 200 is configured for measuring the pressure on the nozzles 60 and is coupled electronically to the electronic control unit 101. The pressure transducer 200 can be turned on and off by a signal 201 and may supply information about the measured pressure on the nozzles 60 via a signal 202.

Typically flow meters have a lower limit for their functioning. If the throughput is lower than such lower limit they will not be capable of providing a usable measurement. Such low throughput may occur in connection with spraying in so-called wedges (eg where the field has an irregular shape). In such situations the common control systems cannot regulate the regulation valve on the basis of the flow.

If the throughput/flow is lower than said lower limit for the area of functioning of the flow meter, the flow meter 40 is disconnected and the pressure transducer 200 is connected, ie input from the flow meter 40 is replaced by input from a pressure transducer 200. The regulation of the regulating valve 30 can now be performed on the basis of information on the pressure rather than the flow. The regulation is based on logged data used for the calculation of the flow. This calculation of flow thus replaces input from the flow meter in the ordinary regulation routine.

Thereby it becomes possible to more accurately regulate the throughput to the nozzles 60 even outside the area of functioning of the flow meter 40.

The invention also relates to a mobile spraying plant 1 for spraying of crops comprising a tank 10; at least one nozzle 60 for fluid communication 70 with said tank 10; a controllable regulating valve 30 for regulating a liquid flow between the tank 10 and said nozzle(s) 60; an electronic control unit 101 configured for controlling the degree of opening of said regulating valve 30 comprising a calculator unit and a storage/register; and a flow meter 40 for determining the liquid flow between the tank and said nozzle(s) 60 configured for communicating with said electronic control unit 101; wherein the spraying plant 1 also comprises a pressure transducer 200 configured for measuring the pressure on the nozzles 60, when the throughput is outside the area of functioning of the flow meter, said pressure transducer 200 being in communication with said electronic control unit 101, and said electronic control unit 101 being configured for calculating a flow based on data 202 from said pressure transducer 200.

The invention also relates to a method of regulating the throughput of a spraying fluid from a tank 10 to at least one nozzle 60 in a mobile spraying plant, said spraying plant also comprising a controllable regulating valve 30 for regulating a flow of liquid between the tank 10 and said nozzle(s) 60; an electronic control unit 101 configured for controlling the degree of opening of said regulating valve 30 comprising a calculator unit and a storage/register; a flow meter 40 for determining the current flow of liquid between the tank 10 and said nozzles 60 configured for communicating with said electronic control unit 101; and a pressure transducer 200 configured for measuring the pressure on the nozzles 60 and for communicating with said electronic control unit 101 said method comprising regulation of the degree of opening of the regulating valve 30 based on a desired throughput A, information on the speed of the spraying plant 1, and information on the current throughput at least when the spraying plant moves at a predominantly even speed; and wherein the method further comprises registering of the pressure on the nozzles 60 by means of the pressure transducer 200 when the throughput is outside the area of functioning of the flow meter; calculation of the throughput based on the registered pressure; and correction of the degree of opening of the regulating valve 30 based on said calculated throughput, and a desired throughput A, and information on the speed of the spraying plant 1.

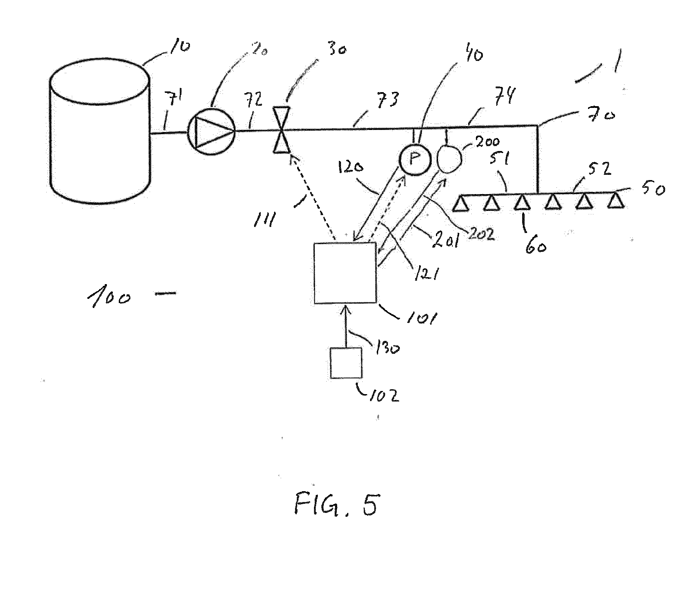

By the above mobile spraying plant 1 and the above method outlined in Figure 5 it is accomplished that it becomes possible to very accurately regulate the regulating valve 30 and hence the throughput of liquid to the nozzles 60 in a mobile spraying plant as was shown in Figure 1 and described in the context of this.

## Claims

1. A mobile spraying plant (1) for spraying crops, said spraying plant comprising
- a tank (10);
- at least one nozzle (60) in fluid communication (70) with said tank (10);
- a controllable regulating valve (30) for regulating a flow of liquid between the tank (10) and the nozzle(s) (60);
- an electronic control (101) unit configured for controlling the degree of opening of the regulating valve (30) and comprising a calculator unit and a storage/register; and
- a flow meter (40) for determining the flow of liquid between the tank and the nozzle(s) (60) and configured for communicating with said electronic control unit (101),
**characterised in that** the spraying plant (1) also comprises a device (35) for registering the degree of opening of the regulating valve, said device being in communication with said electronic control unit; and said electronic control unit being configured for registering, storing and processing data concerning the degree of opening of the regulating valve.

2. A mobile spraying plant (1) according to claim 1, **characterised in that** said device (35) is an electronic sensor.

3. A mobile spraying plant (1) according to claim 1 or 2, **characterised in that** the electronic control unit (101) is also configured for controlling the opening of said regulating valve (30) based on information on the position in the field of the mobile spraying plant (1).

4. A mobile spraying plant (1) according to claim 3, **characterised in that** the electronic control unit (101) comprises a GPS system.

5. A mobile spraying plant (1) according to any one of claims 1-4, **characterised in that** the spraying plant (1) also comprises a pressure transducer (200) configured for measuring the pressure on the nozzles (60) when the throughput is outside the area of functioning of the flow meter, said pressure transducer (200) being in connection with said electronic control unit (101), and said electronic control unit (101) being configured for calculating a flow based on data (202) from said pressure transducer (200).

6. A method of regulating the throughput of a spraying liquid from a tank (10) to at least one nozzle in a mobile spraying plant (1), said spraying plant (1) also comprising:
- a controllable regulating valve (30) for regulating a flow of liquid between the tank (10) and the nozzle(s) (60);
- an electronic control unit (101) configured for controlling the opening of the regulating valve (30), comprising a calculator unit and a storage/register;
- a flow meter (40) for determining the current flow of liquid between the tank (10) and the nozzle(s) (60), configured for communicating with said electronic control unit (101); and
- a device (35) for registering the opening of the regulating valve (30)
configured for communicating with said electronic control unit (101), which method comprises
- regulation of the opening of the control valve (30) based on a desired throughput (A), information on the speed of the spraying plant, and information on the current throughput at least when the spraying plant moves at a predominantly even speed,
**characterised in that** the method also comprises:
- continuous registration of the opening of the regulating valve (30) and the speed of the spraying plant (1) in time intervals when the current throughput is comprised with the first interval (B) around the desired throughput (A);
- calculation and saving in the electronic control unit (101) of a correlation between the speed of the spraying plant (1) and the degree of opening of the regulating valve (30) based on said registration; and
- correction of the degree of opening of the regulating valve in case of changes in speed on the basis of said stored correlation.

7. A method of regulating throughput of a spraying liquid in accordance with claim 6, **characterised in that** the degree of opening of the regulating valve (30) is also corrected on the basis of information (140) concerning the number of active nozzles (60).

8. A method of regulating throughput of a spraying liquid in accordance with claim 6 or 7, **characterised in that** the degree of opening of the regulating valve (30) is also corrected on the basis of information (150) regarding a new desired dosage depending on the position of the mobile spraying plant (1).

9. A method of regulating throughput of a spraying liquid in accordance with claim 8, **characterised in that** the information (150) is entered by the driver of the mobile spraying plant (1).

10. A method of regulating throughput of a spraying liquid in accordance with claim 8, **characterised in that** the information (150) is automatically collected information on positions that is compared to stored information on desired dosage.

11. A method of regulating throughput of a spraying liquid in accordance with any one of claims 7-10, **characterised in that** the method also comprises
- registering of the pressure on the nozzles (60) by means of the pressure transducer (200) when the throughput is outside the area of functioning of the flow meter;
- calculation of the throughput based on the registered pressure; and
- correction of the degree of opening of the regulating valve (30) based on said calculated throughput and a desired throughput (A) and information on the speed of the spraying plant (1).

12. Use of the spraying plant (1) as featured in claims 1-5 for exercising the method featured in claims 6-12.

13. A mobile spraying plant (1) for spraying crops, comprising a tank (10);
- at least one nozzle (60) in fluid communication (70) with said tank (10);
- a controllable regulating valve (30) for regulating a flow of liquid between the tank (10) and said nozzle(s) (60);
- an electronic control unit (101) configured for controlling the degree of opening of said regulating valve (30) comprising a calculation unit and a storage/register; and
- a flow meter (40) for determining the flow of liquid between the tank and said nozzle(s) (60) configured for communicating with said electronic control unit (101);
**characterised in that** the spraying plant (1) also comprises a pressure transducer (200) configured for measuring the pressure on the nozzles (60) when the throughput is outside the area of functioning of the flow meter; which pressure transducer (200) is in communication with said electronic control unit (101); and said electronic control unit (101) being configured for calculating a flow based on data (202) from said pressure transducer (200).

14. A method of regulating throughput of a spraying liquid from a tank (10) to at least one nozzle in a mobile spraying plant (1), which spraying plant (1) also comprises:
- a controllable regulating valve (30) for regulating a liquid flow between the tank (10) and said nozzle(s) (60);
- an electronic control unit (101) configured for controlling the degree of opening of said regulating valve (30) comprising a calculator unit and a storage/register;
- a flow meter (40) for determining the current liquid flow between the tank (10) and said nozzle(s) (60) configured for communicating with said electronic control unit (101); and
- a pressure transducer (200) configured for measuring the pressure on the nozzles (60) configured for communicating with said electronic control unit (101);
said method comprising
- regulation of the degree of opening of the regulating valve (30) based on a desired throughput (A), information on the speed of the spraying plant (1), and information on the current throughput at least when the spraying plant moves at a predominantly even speed;
**characterised in that** the method also comprises:
- registration of the pressure on the nozzles (60) by means of the pressure transducer (200) when the throughput is outside the area of functioning of the flow meter;
- calculation of the throughput based on the registered pressure; and
- correction of the degree of opening of the regulating valve based on said calculated throughput and a desired throughput (A) and information on the speed of the spraying plant (1).
